# FASCICULE DE BREVET EUROPEEN

(11) **EP 2 110 969 B1**
(45) Date de publication et mention de la délivrance du brevet: **19.02.2014**
(21) Numéro de dépôt: 09290247.7
(22) Date de dépôt: 01.04.2009
(51) Int. Cl.: H04B 7/26, G08B 25/10

(54) **Procédé et système de surveillance d'objets dans une zône délimitée**
Verfahren und Vorrichtung zur Überwachung von Objekten in einem vorgegebenen Bereich
Method and system for surveying objects within a predefined zone

(30) Priorité: 17.04.2008 FR 0852593
(43) Date de publication de la demande: 21.10.2009
(73) Titulaire: Globe Electronics, 85180 Chateau d'Olonne (FR)
(72) Inventeur: Desombre, Aurélien, 95470 Saint Witz (FR)
(74) Mandataire: Novagraaf Technologies

(56) Documents cités:
- WO-A-2005/043480
- WO-A-2005/125108
- US-A1- 2004 218 577

## Description

### DOMAINE TECHNIQUE DE L'INVENTION

L'invention se rapporte à un procédé et un système de surveillance d'objets au sein d'une zone d'observation délimitée, par lesquels une unité centrale de gestion de réseau contrôle périodiquement la présence d'émetteurs portables fixés sur ces objets.

La présente invention concerne le domaine technique de la surveillance d'objets, d'animaux ou de personnes, telles que de jeunes enfants, des patients psychiatriques ou des prisonniers, pour contrôler leur présence dans une zone d'observation délimitée.

L'invention vise plus particulièrement le domaine de la surveillance de personnes à bord d'un navire dans le but de déclencher automatiquement une alarme en cas de chute par dessus bord.

### ETAT DE LA TECHNIQUE ANTERIEURE

Il est connu de l'état de la technique les documents de brevet n° WO 2005/125108 et WO 2005/125127 qui décrivent un dispositif et un procédé de détection et de repérage, pour équipage d'un navire, destiné à faciliter le sauvetage d'un équipier tombé à la mer. Ce procédé a pour but d'assurer la couverture totale d'un espace étendu avec des obstacles (cloisons, étages...) et surveiller la présence dans cet espace d'une pluralité de points mobiles.

À ce titre, le dispositif objet du document n° WO 2005/125108 comprend un scrutateur et plusieurs émetteurs portables communiquant avec le scrutateur par le biais d'éléments de communication mobiles jouant le rôle de répéteur entre les émetteurs portables et le scrutateur. Dans ce brevet WO 2005/125108, chaque point du réseau correspond lui même à un noeud d'un réseau maillé auto-adaptatif qui s'organise en groupes en fonction de l'accès direct au scrutateur (groupe 1), ou de l'accès à un noeud du groupe 1 sans accès direct au scrutateur (groupe 2), ou de l'accès à un noeud du groupe 2 sans accès à un noeud du groupe 1 (groupe 3), etc. Ce réseau établit des communications radio en émission et en réception entre tous les noeuds du réseau. La communication est initialisée par le scrutateur qui émet une requête et l'émetteur répond à la requête.

Cependant, ce dispositif ne permet pas de limiter la consommation du dispositif suffisamment pour augmenter de façon conséquente l'autonomie du dispositif. En effet, dans un tel réseau, un émetteur portable a une consommation d'énergie qui dépend de la durée pendant laquelle il est actif, c'est à dire pendant laquelle il émet un signal et écoute en réception. Il faut donc minimiser cette activité. Dans un cas extrême, l'émetteur du système selon le document WO 2005/125108 pourrait être seul dans le groupe 1 et tous les autres dans le groupe 2. Cet émetteur unique du groupe 1 devrait alors rester en écoute permanente pour recevoir les émetteurs du groupe 2, mais aussi en émission permanente pour répéter les émissions du scrutateur à l'intention de chacun des émetteurs du groupe 2. Les émetteurs portables étant en mouvement permanent, il est impossible de prévoir quel émetteur pourrait se trouver dans cette situation et pour combien de temps. L'autonomie décroît alors rapidement avec l'augmentation du nombre d'émetteurs.

Par ailleurs, ce procédé de communication présente une complexité importante notamment due à la fréquence de reconfiguration du réseau lors des mouvements des émetteurs passant d'un groupe à l'autre. Lors d'une manoeuvre en mer par exemple les mouvements des émetteurs portables peuvent être rapides et la reconfiguration des groupes permanente, mobilisant ainsi la communication pour des informations de service au détriment de l'information utile. Le risque de fausses alarmes est alors important si un émetteur n'est pas dans le groupe dans lequel le réseau l'a placé.

L'état de la technique comprend également des systèmes similaires basés sur le protocole de communication ZIGBEE.

Dans ce cas cependant, les émetteurs portables ne disposent pas d'un intervalle de temps dédié et émettent de façon aléatoire. Le risque de collisions augmente donc rapidement avec le nombre de modules répéteurs et d'émetteurs ce qui rend difficile de couvrir de façon satisfaisante des navires importants.

### EXPOSE DE L'INVENTION

La présente invention vise à pallier les inconvénients de l'état de la technique en proposant un système et un procédé de surveillance permettant de réduire la consommation électrique des émetteurs portables afin de maximiser leur autonomie sur batterie et de pouvoir garantir une autonomie minimale optimisée.

Le système et le procédé selon l'invention vise selon d'autres aspects à réduire le nombre d'alarmes déclenchées de façon accidentelle et améliorer la rapidité de génération d'une alarme en cas de rupture de communication.

Pour ce faire, la présente invention prévoit de simplifier la configuration du réseau et le protocole de communication, en privilégiant l'utilisation de modules répéteurs fixes, alimentés par des sources externes.

Plus précisément, l'invention a pour objet un procédé de surveillance d'au moins un émetteur portable par une unité centrale de gestion de réseau en communication avec au moins un module répéteur fixe couvrant une zone d'observation délimitée, le procédé comportant périodiquement une phase de synchronisation dudit au moins un émetteur portable au moyen d'un message de synchronisation émis par l'unité centrale de gestion de réseau, le message de synchronisation initiant un cycle de communication comprenant des intervalles de temps dédiés audit au moins un émetteur portable et audit au moins un répéteur. Pendant lesdits intervalles de temps qui lui sont dédiés, ledit au moins un émetteur portable ne fait qu'émettre un message de présence pour communiquer avec l'unité centrale de gestion de réseau.

Lors de la mise en service du réseau des intervalles de temps sont associés aux modules répéteurs et aux émetteurs portables. L'émetteur portable limite ainsi son activité à une émission brève et évite d'avoir à écouter le scrutateur à chaque période d'émission. L'émetteur portable peut ainsi signaler sa présence le plus simplement possible : par l'émission spontanée périodique d'un message de présence indépendamment de la configuration instantanée du réseau.

Par conséquent, les communications radio de l'émetteur portable en réception sont évitées lors de la phase nominale de fonctionnement de cet émetteur portable. En outre, connaissant la consommation d'un émetteur portable, la consommation en fonctionnement est calculable et la durée de fonctionnement peut être garantie.

Selon des modes de réalisation particuliers :
- lors de la phase de synchronisation, ledit au moins un émetteur portable passe en procédure d'écoute sélective dans l'intervalle de temps du dernier module répéteur par lequel un signal de synchronisation a été reçu. Plus le nombre de modules répéteur est important, plus la phase d'écoute de tous les modules répéteurs est longue et consommatrice d'énergie. La procédure d'écoute sélective permet de limiter l'écoute à l'intervalle de temps du dernier module répéteur par lequel un signal de synchronisation a été reçu et donc de diminuer la consommation d'énergie des émetteurs portables ;
- ledit au moins un émetteur portable passe en procédure d'écoute permanente de tous les au moins un module répéteur lorsque aucun message de synchronisation n'a été détecté durant la phase de synchronisation. Il est ainsi possible de fonctionner en procédure d'écoute sélective la plupart du temps même en cas de déplacement de l'émetteur portable.
- chaque module répéteur est en mode d'écoute permanente de tous les émetteurs portables en dehors de l'intervalle de temps qui lui est attribué.
- l'ordre d'attribution des intervalles de temps des modules répéteurs dans le cycle de communication est inversé par rapport à l'ordre croissant d'éloignement de ces modules répéteurs vis-à-vis de l'unité centrale de gestion de réseau. On favorise ainsi la rapidité de transmission de l'information de l'émetteur portable vers l'unité centrale de gestion de réseau et donc le délai de réaction en cas d'absence d'émission.
- la période du cycle de communication est d'environ deux secondes. Un délai d'environ deux secondes est suffisamment long pour offrir un nombre satisfaisant d'intervalles de temps et suffisamment court pour offrir un délai de réaction de l'ordre de 10 secondes en cas d'absence d'émission vérifiée au moins trois fois.
- l'unité centrale de gestion de réseau émet un message d'alerte dès lors qu'un émetteur portable ne lui a pas transmis de message de présence depuis au moins trois cycles de communication.
- La période de synchronisation est distincte de la période d'émission ce qui permet d'allonger la période de synchronisation et de limiter la procédure d'écoute de tous les modules répéteurs consommatrice d'énergie. Il est important d'établir une vérification par redondance afin d'éviter les fausses d'alarmes qui pourraient provenir d'un isolement bref de l'émetteur portable.

L'invention concerne également un système de surveillance d'au moins un émetteur portable par une unité centrale de gestion de réseau en communication avec au moins un module répéteur fixe couvrant une zone d'observation délimitée, ledit au moins un émetteur portable se synchronisant périodiquement, lors d'une phase de synchronisation, au moyen d'un message de synchronisation émis par l'unité centrale de gestion de réseau, le message de synchronisation initiant un cycle de communication comprenant des intervalles de temps dédiés audit au moins un émetteur portable et audit au moins un module répéteur, dans lequel, pendant lesdits intervalles de temps qui lui sont dédiés, ledit au moins un émetteur portable est agencé pour ne faire qu'émettre un message de présence.

Selon une particularité, le système de surveillance est tel que chaque module répéteur est alimenté par une source externe.

Les modules répéteurs, alimentés par une source externe, peuvent s'affranchir d'une recherche d'économie d'énergie et ainsi être constamment en écoute de tous les modules du système. Cette configuration permet de limiter les communications impliquant les émetteurs portables. Ainsi, la période d'activité de ces émetteurs portables est minimisée et l'autonomie de la batterie est optimisée. D'autre part, le délai de génération d'une alarme est calculable et peut donc être garantie.

### BRÈVE DESCRIPTION DES FIGURES

D'autres caractéristiques et avantages de l'invention ressortiront à la lecture qui suit d'un exemple de réalisation détaillé, en référence aux figures annexées qui représentent respectivement :
- Les figures 1a et 1b, deux vues schématiques d'un exemple de réalisation d'un système de surveillance selon l'invention ; et
- la figure 2, un diagramme représentant un cycle de communication du procédé de surveillance selon l'invention ;
- la figure 3, un organigramme représentant les différentes étapes du procédé de surveillance selon l'invention.

Pour plus de clarté, les éléments identiques ou similaires sont repérés par des signes de référence identiques sur l'ensemble des figures.

### DESCRIPTION DETAILLEE D'UN MODE DE REALISATION

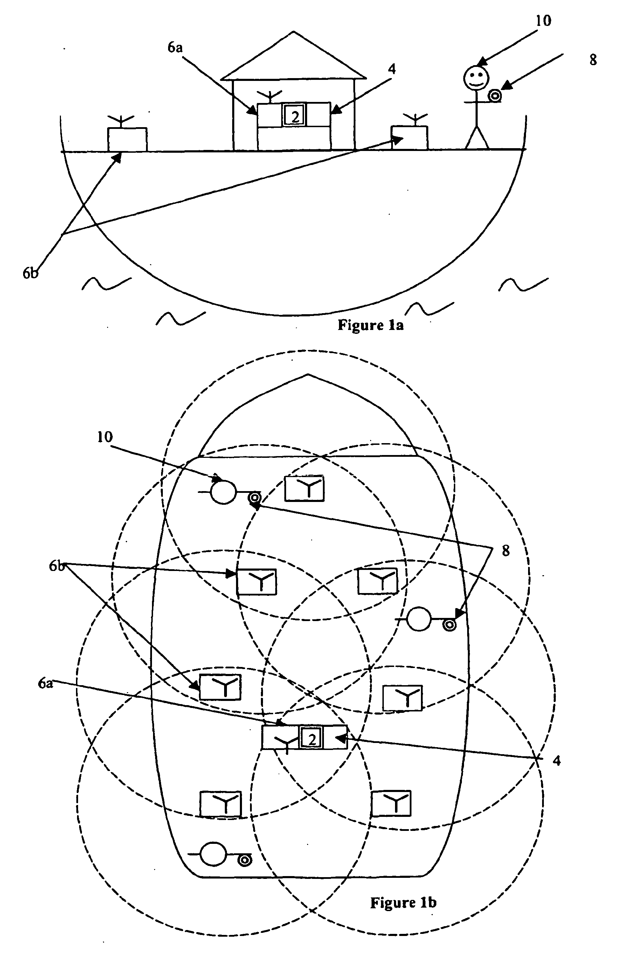

La figure 1 décrit un exemple de réalisation d'un système de surveillance selon l'invention placé à bord d'un navire.

Dans cet exemple, une unité centrale de gestion de réseau 2, reliée à une unité de commande 4 du navire, est en communication avec un premier module répéteur 6a présentant une portée de radiocommunication d₂. Cet ensemble formé par l'unité centrale de gestion de réseau 2 associé au premier module répéteur 6a forme un module scrutateur.

Compte tenu du nombre de répéteurs et d'émetteurs pouvant être engagé dans le réseau, une configuration micro-logicielle, ou *firmware,* est retenue.

Le système de surveillance comporte, par ailleurs, N modules répéteurs secondaires 6b fixes qui présentent une portée de radiocommunication d₆ et couvre une zone d'observation délimitée. Ainsi, tout point de la zone d'observation, située sur le navire, est en liaison radio avec l'unité centrale de gestion de réseau 2, par le biais des modules répéteurs 6a, 6b. De plus, chaque module répéteur 6a et 6b est lui-même en liaison radio avec l'unité centrale de gestion de réseau 2, soit directement, soit par l'intermédiaire d'un ou plusieurs autres modules répéteurs 6a et 6b. l'unité centrale de gestion de réseau 2 et les modules répéteurs 6a et 6b sont en outre alimentés en électricité par une source externe et présentent donc une autonomie illimitée.

Le système de surveillance comporte également M émetteurs portables 8, alimentés par une batterie interne, signalant leur présence périodiquement. Ces émetteurs portables 8 sont liés aux objets surveillés 10. Dans cet exemple de réalisation, les objets surveillés 10 font partie de l'équipage du navire. Ce système de surveillance permet alors de détecter toute chute de ces personnes par dessus bord dés lors que la présence d'un émetteur portable 8 n'est plus détectée depuis plus de trois cycles de communication.

Avantageusement, l'unité centrale de gestion de réseau 2 du navire présente un module de calcul de l'autonomie des émetteurs 8 ainsi que des modules de procédures d'urgence en liaison avec l'unité de commande 4 du navire pour l'émission d'une alarme sonore, l'arrêt du système de propulsion du navire, le calcul de la dernière position de l'émetteur portable avant sa disparition, etc.

Selon trois modes de réalisation de l'invention, le système de surveillance peut comporter :
- huit modules répéteurs, trente-six émetteurs portables, et une redondance avant la procédure d'urgence égale à quatre ;
- vingt modules répéteurs, vingt émetteurs portables, et une redondance avant la procédure d'urgence égale à quatre ; ou bien
- trente modules répéteurs, vingt émetteurs portables, et une redondance avant la procédures d'urgence égale à trois.

Selon d'autres exemples d'utilisation de l'invention, les émetteurs portables 8 pourraient être reliés à tout autre objet mobile 10, des animaux ou des personnes, telles que de jeunes enfants, des patients psychiatriques ou des prisonniers.

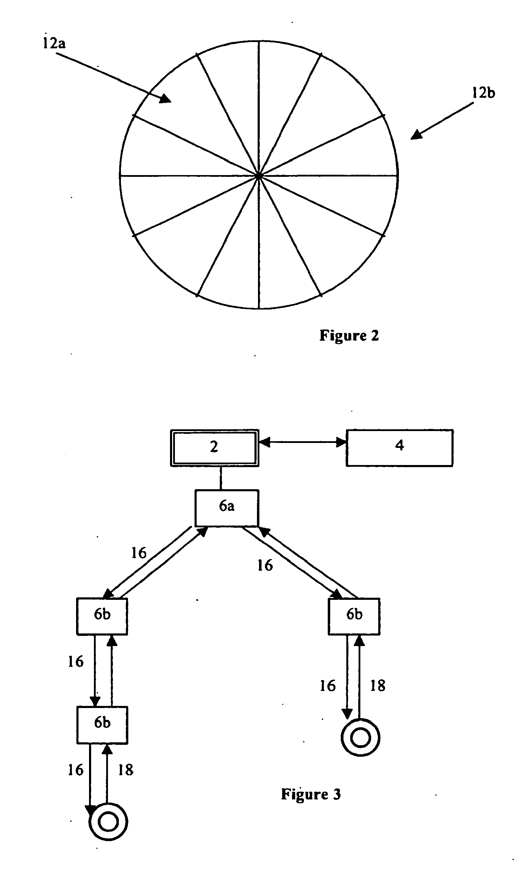

Le système de surveillance selon l'invention permet la mise en oeuvre d'un protocole de communication périodique dont le cycle est représenté sur la figure 2.

Le protocole de communication périodique fonctionne selon un mode d'accès multiple à répartition dans le temps, dit mode de multiplexage temporel *TDMA*, présentant un cycle de communication 12a d'une période prédéterminée.

Un nombre d'intervalles de temps 12b au moins égal au nombre total de modules répéteurs 6a et 6b, additionné au nombre d'émetteurs portables 8 est découpé dans le cycle de communication 12a.

Selon un mode réalisation, la période du cycle de communication 12a est sensiblement égale à deux secondes et les intervalles de temps sont de 50 millisecondes. Ainsi la quantité de données pouvant être transmises dans un intervalle de temps est de 300 octets.

Un intervalle de temps est affecté à l'unité centrale de gestion de réseau 2, à chaque module répéteur 6a et 6b, et à chaque émetteur portable 8 lors de la mise en service du système et cette affectation ne change pas par la suite.

En outre, la communication entre les différents éléments du système est simplifiée au maximum et ne comporte que deux phases en fonctionnement :
- une phase de synchronisation durant laquelle un message de synchronisation 16, associé à des informations de service et émis par l'unité centrale de gestion de réseau 2, est relayé par les modules répéteurs 6 et écouté par les émetteurs portables 8 ; ainsi que
- une phase nominale durant laquelle chaque émetteur portable 8 se contente d'émettre un message de présence 18, associé à des informations de service, au cours de chaque cycle de communication 12a. Ce message de présence 18 est relayé par les modules répéteurs 6 à destination de l'unité centrale de gestion de réseau 2.

Les émetteurs portables 8 sont actifs pendant l'intervalle de temps 12b du cycle de communication 12a qui leur est dédié, ainsi que lors des phases de synchronisation. Ils passent au contraire en mode sommeil, en dehors de ces intervalles de temps.

Quels que soient les mouvements des émetteurs portables 8 dans la zone d'observation, la configuration du réseau reste identique, l'information utile est privilégiée et le risque de fausse alarme est diminué.

L'organigramme du protocole de communication du procédé selon l'invention va maintenant être décrit en référence à la figure 3.

Il est à noter que l'unité centrale de gestion de réseau 2 et les modules répéteurs 6a et 6b sont alimentés par une batterie externe et restent donc dans un mode d'écoute permanente.

Toutes les deux secondes, c'est à dire pour chaque cycle de communication, l'unité centrale de gestion de réseau 2 émet un message de synchronisation 16 associé à des informations de service. Le message de synchronisation 16 comprend notamment :
- Des données d'identification du transmetteur (unité centrale de gestion de réseau 2 ou répéteur 6a et 6b) ;
- des accusés de réception des demandes de connexion ou de déconnexion des émetteurs portables 8 ;
- une liste des émetteurs portables 8 déconnectés ;
- des codes de contrôle d'intégrité du message de synchronisation 16.

Chaque module répéteur 6 reçoit le message de synchronisation 16 et les données de service, soit directement, soit par l'intermédiaire d'un autre module répéteur 6. Les modules répéteurs 6a et 6b se synchronisent avec le module scrutateur 2 et émettent à leur tour un message de synchronisation 16, associé à des informations de services, dans les intervalles de temps 12b qui leur ont été attribués. Par exemple, si le message de synchronisation 16 de l'unité centrale de gestion de réseau 2 est émis à un instant T₀ = 0 millisecondes, alors le message de synchronisation 16 du premier module répéteur 6 sera émis à l'instant T₁ = 50 millisecondes, puis le message de synchronisation 16 du deuxième module répéteur 6 sera émis à l'instant T₂ = 100 millisecondes, etc.

De préférence, pour que la propagation de l'information de l'émetteur portable 8 vers l'unité centrale de gestion de réseau 2 par le biais des différents modules répéteurs 6 soit rapide, l'ordre d'attribution des intervalles de temps 12b des modules répéteurs 6 dans le cycle de communication 12a est inversé par rapport à l'ordre croissant d'éloignement de ces modules répéteurs 6 vis-à-vis de l'unité centrale de gestion de réseau 2. Ainsi, le premier intervalle de temps 12b du cycle de communication 12a attribué à un module répéteur correspond à l'intervalle de temps 12b dédié au module répéteur 6 le plus éloigné. Le deuxième intervalle de temps 12b dédié à un module répéteur 6 correspond à l'intervalle de temps 12b dédié au deuxième module répéteur 6 le plus éloigné et ainsi de suite.

Dans un mode de démarrage ou d'arrêt, les différents émetteurs portables 8 sont en écoute permanente. Dés qu'un émetteur portable 8 reçoit un message de synchronisation 16, soit de l'unité centrale de gestion de réseau 2 directement, soit de l'un des modules répéteur 6a et 6b, il passe en phase nominale, puis repasse en phase de synchronisation périodiquement, toutes les 60 secondes.

Selon un premier mode de réalisation, lors de la phase de synchronisation, les émetteurs portables se placent en mode d'écoute dans les intervalles de temps 12b attribués au module scrutateur et aux modules répéteurs 6a et 6b.

Les émetteurs portables 8 sont alors en mode d'écoute pendant une durée correspondant au nombre de module répéteur 6a et 6b multiplié par 50 millisecondes. Durant cette phase de synchronisation, ils reçoivent en principe le message de synchronisation 16 de l'un des modules répéteurs 6a et 6b. Si, lors d'une phase de synchronisation, un émetteur portable 8 ne reçoit aucun message de synchronisation 16, l'émetteur portable 8 repasse en mode de démarrage et donc en écoute permanente.

Toutefois, dans le cas où le nombre de modules répéteur 6a et 6b est important, le mode de synchronisation défini par le protocole qui consiste à écouter toutes les 60 secondes tous les intervalles de temps 12b du module scrutateur 2 et des modules répéteurs 6a et 6b consomme de l'énergie inutilement. En effet, l'émetteur 8 écoute alors des intervalles de temps 12b correspondant à des répéteurs 6a et 6b hors de portée.

Par conséquent, le dernier intervalle de temps 12b dans lequel un signal de synchronisation 16 a été reçu est, avantageusement, mémorisé. Ainsi, lors de la phase de synchronisation, l'émetteur portable 8 passe en procédure d'écoute sélective, dans l'intervalle de temps 12b du dernier module répéteur 8 par lequel un signal de synchronisation 16 a été reçu. Si l'émetteur a bougé et ne reçoit plus de signal de synchronisation 16 lors de cette phase de synchronisation, alors il repasse en mode d'écoute permanente pour retrouver une synchronisation avec le module scrutateur 2 ou l'un des modules répéteur 6.

Selon un autre mode de réalisation, les émetteurs portables 8 pourront embarquer une base de temps, suffisamment précise, pour entretenir sa propre synchronisation durant une période longue de synchronisation, afin de diminuer sa consommation énergétique. La période de synchronisation de l'émetteur portable 8 choisie sera un compromis entre la consommation énergétique, et le délai de réaction de celui-ci lors d'une éventuelle déconnexion, c'est-à-dire lorsque l'émetteur portable 8 récupère une information lui indiquant qu'il n'est plus sous surveillance dans le message de synchronisation 16.

Par ailleurs, chaque émetteur portable 8 émet un message de présence 18 toutes les deux secondes dans l'intervalle de temps 12b qui lui est dédié. De façon avantageuse, chaque émetteur portable 8 peut également diffuser des données d'alarme ou d'inhibition d'alarme.

Le message de présence 18 émis par les émetteurs portables 8 peut ainsi comprendre :
- l'identification de l'émetteur ;
- l'état de ses batteries ;
- une commande système telle qu'une demande de connexion ou de déconnexion, un déclenchement volontaire d'alarme, ou une inhibition d'alarme en cours ;
- les codes de contrôle d'intégrité du message 18.

Les modules répéteurs 6a et6b, placés en écoute permanente, reçoivent les message de présence 18 émis par les émetteurs portables 8 situés à portée de leur zone de radiocommunication et relayent ces messages de présence 18, dans l'intervalle de temps 12b qui leur est attribué, toutes les deux secondes. L'unité centrale de gestion de réseau peut donc recevoir soit directement par l'intermédiaire du premier module répéteur 6a, soit par l'intermédiaire de plusieurs modules répéteurs 6a et 6b, le message de présence 18 émanant de chaque émetteur portable 8.

Il est à noter que les modules répéteurs 6a et 6b possèdent une table des émetteurs portables 8 dont le message de présence 18 doit être relayé de sorte que chaque module répéteur 6a et 6b ne répète jamais plus d'une fois le message de présence 18 d'un émetteur portable 8.

Par conséquent, lorsque le système de surveillance est en fonctionnement, chaque émetteur portable 8 émet toutes les deux secondes un message de présence 16 dans l'intervalle de temps 12b qui lui est dédié et ce message de présence 18 est ensuite reçu par l'unité centrale de gestion de réseau 2.

Le système de surveillance s'active lorsque l'unité centrale de gestion de réseau 2 ne reçoit pas de message de présence 18 d'un émetteur portable 8 pendant plus de quatre cycles de communication. L'unité centrale de gestion de réseau 2 lance alors via l'unité de commande 4 le module d'alarme pour lancer une procédure de sauvetage.

Bien entendu, le paramétrage du système de surveillance peut permettre de choisir le nombre de cycle de communication 12a a effectuer avant de lancer la procédure de sauvetage. Selon des modes de réalisation préférés, le nombre de cycle de communication 12a sera supérieur ou égale à trois et inférieur ou égal à cinq en fonction de la configuration.

De la même façon, les paramètres du système de surveillance pourraient être optimisés en fonction de sa configuration de sorte à améliorer son fonctionnement. Par exemple, le système pourrait être programmé à l'installation en saisissant les paramètres et éventuellement en augmentant ou en diminuant le nombre de zones d'observation, d'émetteurs portables 8 et/ou la redondance des cycles de communication avant la procédure d'alerte.

Selon divers modes de configuration, il faudrait ajouter :
- 40 ms pour un émetteur supplémentaire, la période de division du temps 12b passerait donc à 2,04 secondes ;
- 60 ms pour une zone d'observation, la période de division du temps 12b passerait donc à 2,06 secondes ; et
- 0 ms pour deux zones d'observation en retirant 3 émetteurs, la période de division du temps 12b passerait donc à 2,00 secondes.

Dans la mesure où les paramètres du système de surveillance selon l'invention restent fixes, le module de calcul de l'unité central permet de déduire de ces paramètres le délai de réaction en cas de chute d'un passager en dehors de la zone d'observation. De la même façon, l'unité centrale de gestion de réseau peut également calculer l'autonomie du système.

L'invention n'est pas limitée aux exemples de réalisation décrits et représentés. Par exemple, dans le cas où le débit radio des éléments du système de surveillance serait limité, les intervalles de temps 12b des émetteurs portables pourraient être diminués par rapport aux intervalles de temps 12b de l'unité centrale de gestion de réseau 2 et des modules répéteurs 6. Cette configuration permettrait, le cas échéant, de passer à des fréquences de l'ordre de 868 Mhz.

Par ailleurs, la mise en oeuvre d'un procédé de surveillance dans lequel, en dehors de la phase de synchronisation, les émetteurs portables 8 réalisent une autre opération que l'émission périodique d'un message de présence 18 ne devrait pas sortir du cadre de la présente invention si cette opération ne présente pas d'utilité fonctionnelle pour la communication des émetteurs portables 8 avec l'unité centrale de gestion 2.

## Revendications

1. Procédé de surveillance d'au moins un émetteur portable (8) par une unité centrale de gestion de réseau (2) en communication avec au moins un module répéteur (6) couvrant une zone d'observation délimitée, le procédé comportant périodiquement une phase de synchronisation dudit au moins un émetteur portable (8) au moyen d'un message de synchronisation (16) émis par l'unité centrale de gestion de réseau (2), le message de synchronisation (16) initiant un cycle de communication (12a) comprenant des intervalles de temps (12b) dédiés audit au moins un émetteur portable (8) et audit au moins un répéteur (6), **caractérisé en ce que** les modules répéteurs (6) sont fixes et **en ce que**, pendant lesdits intervalles de temps (12b) qui lui sont dédiés, ledit au moins un émetteur portable (8) ne fait qu'émettre un message de présence (18) pour communiquer avec l'unité centrale de gestion de réseau (2).

2. Procédé de surveillance selon la revendication 1, dans lequel, lors de la phase de synchronisation, ledit au moins un émetteur portable (8) passe en procédure d'écoute sélective dans l'intervalle de temps (12b) du dernier module répéteur (6) par lequel un signal de synchronisation (16) a été reçu.

3. Procédé de surveillance selon la revendication 2, dans lequel ledit au moins un émetteur portable (8) passe en procédure d'écoute permanente lorsque aucun message de synchronisation (16) n'a été détecté durant la phase de synchronisation.

4. Procédé de surveillance selon l'une quelconque des revendications 1 à 3, dans lequel chaque module répéteur (6) est en mode d'écoute permanente de tous les émetteurs portables (8) en dehors de l'intervalle de temps (12b) qui lui est attribué.

5. Procédé de surveillance selon l'une quelconque des revendications 1 à 4, dans lequel l'ordre d'attribution des intervalles de temps (12b) des modules répéteurs (6) dans le cycle de communication (12a) est inversé par rapport à l'ordre croissant d'éloignement de ces modules répéteurs (6) vis-à-vis de l'unité centrale de gestion de réseau (2).

6. Procédé de surveillance selon l'une quelconque des revendications 1 à 5, dans lequel la période du cycle de communication (12a) est d'environ deux secondes.

7. Procédé de surveillance selon l'une quelconque des revendications 1 à 6, dans lequel l'unité centrale de gestion de réseau (2) émet un message d'alerte dès lors qu'un émetteur portable (8) ne lui a pas transmis de message de présence (18) depuis au moins trois cycles de communication (12a).

8. Système de surveillance d'au moins un émetteur portable (8) par une unité centrale de gestion de réseau (2) en communication avec au moins un module répéteur (6) couvrant une zone d'observation délimitée, ledit au moins un émetteur portable (8) se synchronisant périodiquement, lors d'une phase de synchronisation, au moyen d'un message de synchronisation (16) émis par l'unité centrale de gestion de réseau (2), le message de synchronisation (16) initiant un cycle de communication (12a) comprenant des intervalles de temps (12b) dédiés audit au moins un émetteur portable (8) et audit au moins un répéteur (6), **caractérisé en ce que** les modules répéteurs (6) sont fixes et **en ce que**, pendant lesdits intervalles de temps (12b) qui lui sont dédiés, ledit au moins un émetteur portable (8) est agencé pour n'émettre qu'un message de présence (18).

9. Système de surveillance selon la revendication 8, **caractérisé en ce que** chaque module répéteur (6) est alimenté par une source externe.

## Patentansprüche

1. Verfahren zur Überwachung mindestens eines tragbaren Senders (8) durch eine Netzsteuerungszentrale (2), die mit mindestens einem Repeatermodul (6) in Verbindung steht, das eine begrenzte Beobachtungszone abdeckt, wobei das Verfahren periodisch eine Synchronisierungsphase des mindestens einen tragbaren Senders (8) mit Hilfe einer Synchronisierungsmeldung (16), die von der Netzsteuerungszentrale (2) entsandt wird, umfasst, wobei die Synchronisationsmeldung (16) einen Kommunikationszyklus (12a) einleitet, umfassend Zeitintervalle (12b), die für den mindestens einen tragbaren Sender (8) und für den mindestens einen Repeater (6) bestimmt sind, umfasst, **dadurch gekennzeichnet, dass** die Repeatermodule (6) fest sind, und dass während der Zeitintervalle (12b), die ihnen zugeordnet sind, der mindestens eine tragbare Sender (8) nur eine Anwesenheitsmeldung (18) entsendet, um mit der Netzsteuerungszentrale (2) zu kommunizieren.

2. Überwachungsverfahren nach Anspruch 1, bei dem der mindestens eine tragbare Sender (8) in der Synchronisierungsphase in einen Modus des selektiven Abhörens des letzten Repeatermoduls (6), durch das ein Synchronisierungssignal (16) empfangen wurde, in dem Zeitintervall (12b) übergeht.

3. Überwachungsverfahren nach Anspruch 2, bei dem der mindestens eine tragbare Sender (8) in einen permanenten Abhörmodus übergeht, wenn keine Synchronisierungsmeldung (16) während der Synchronisierungsphase erfasst wurde.

4. Überwachungsverfahren nach einem der Ansprüche 1 bis 3, bei dem jedes Repeatermodul (6) im permanenten Abhörmodus aller tragbaren Sender (8) außerhalb des ihm zugeordneten Zeitintervalls (12b) ist.

5. Überwachungsverfahren nach einem der Ansprüche 1 bis 4, bei dem die Reihenfolge der Zuordnung der Zeitintervalle (12b) der Repeatermodule (6) im Kommunikationszyklus (12a) in Bezug zur aufsteigenden Reihenfolge der Entfernung dieser Repeatermodule (6) gegenüber der Netzsteuerungszentrale (2) umgekehrt wird.

6. Überwachungsverfahren nach einem der Ansprüche 1 bis 5, bei dem die Periode des Kommunikationszyklus (12a) ungefähr zwei Sekunden beträgt.

7. Überwachungsverfahren nach einem der Ansprüche 1 bis 6, bei dem die Netzsteuerungszentrale (2) eine Warnmeldung entsendet, wenn ihr ein tragbarer Sender (8) keine Anwesenheitsmeldung (18) seit mindestens drei Kommunikationszyklen (12a) übermittelt hat.

8. System zur Überwachung mindestens eines tragbaren Senders (8) durch eine Netzsteuerungszentrale (2), die mit mindestens einem Repeatermodul (6) in Verbindung steht, das eine begrenzte Beobachtungszone abdeckt, wobei sich der mindestens eine tragbare Sender (8) periodisch in einer Synchronisierungsphase mit Hilfe einer Synchronisierungsmeldung (16), die von der Netzsteuerungszentrale (2) entsandt wird, synchronisiert, wobei die Synchronisierungsmeldung (16) einen Kommunikationszyklus (12a) einleitet, umfassend Zeitintervalle (12b), die für den mindestens einen tragbaren Sender (8) und für den mindestens einen Repeater (6) bestimmt sind, umfasst, **dadurch gekennzeichnet, dass** die Repeatermodule (6) fest sind und dass während der ihnen zugeordneten Zeitintervalle (12b) der mindestens eine tragbare Sender (8) derart vorgesehen ist, dass er nur eine Anwesenheitsmeldung (18) entsendet.

9. Überwachungssystem nach Anspruch 8, **dadurch gekennzeichnet, dass** jedes Repeatermodul (6) von einer externen Quelle gespeist wird.

## Claims

1. Method for surveillance of at least one portable transmitter (8) by a central network management unit (2) in communication with at least one repeater module (6) covering a delimited observation area, said method periodically having a phase of synchronization of said at least one portable transmitter (8) by means of a synchronization message (16) transmitted by the central network management unit (2), said synchronization message (16) initiating a communication cycle (12a) comprising time intervals (12b) that are dedicated to said at least one portable transmitter (8) and to said at least one repeater (6), **characterized in that** the repeater modules (6) are fixed and **in that**, during said time intervals (12b) that are dedicated to said at least one repeater, said at least one portable transmitter (8) just transmits a presence message (18) in order to communicate with the central network management unit (2).

2. Surveillance method according to Claim 1, in which, during the synchronization phase, said at least one portable transmitter (8) changes to a selective listening procedure in the time interval (12b) of the last repeater module (6) that has received a synchronization signal (16).

3. Surveillance method according to Claim 2, in which said at least one portable transmitter (8) changes to a permanent listening procedure when no synchronization message (16) has been detected during the synchronization phase.

4. Surveillance method according to any of Claims 1 to 3, in which each repeater module (6) is in permanent listening mode for all portable transmitters (8) outside the time interval (12b) that is assigned to it.

5. Surveillance method according to any of Claims 1 to 4, in which the order of assignment of the time intervals (12b) of the repeater modules (6) in the communication cycle (12a) is reversed in relation to the increasing order of distance of these repeater modules (6) from the central network management unit (2).

6. Surveillance method according to any of Claims 1 to 5, in which the period of the communication cycle (12a) is approximately two seconds.

7. Surveillance method according to any of Claims 1 to 6, in which the central network management unit (2) transmits a warning message from the moment at which a portable transmitter (8) has not sent it a presence message (18) for at least three communication cycles (12a).

8. System for surveillance of at least one portable transmitter (8) by a central network management unit (2) in communication with at least one repeater module (6) covering a delimited observation area, said at least one portable transmitter (8) periodically synchronizing itself, during a synchronization phase, by means of a synchronization message (16) transmitted by the central network management unit (2), said synchronization message (16) initiating a communication cycle (12a) comprising time intervals (12b) that are dedicated to said at least one portable transmitter (8) and to said at least one repeater (6), **characterized in that** the repeater modules (6) are fixed and **in that**, during said time intervals (12b) that are dedicated to said at least one repeater, said at least one portable transmitter (8) is designed to transmit just presence message (18).

9. Surveillance system according to Claim 8, **characterized in that** each repeater module (6) is powered by an external source.
